**Europäisches Patentamt**

**European Patent Office**

**Office européen des brevets**

(11) Veröffentlichungsnummer: **0 260 342 B1**

(12) **EUROPÄISCHE PATENTSCHRIFT**

(45) Veröffentlichungstag der Patentschrift: **08.01.92**

(51) Int. Cl.⁵: **B28B 1/52**, C04B 40/00

(21) Anmeldenummer: **86112977.3**

(22) Anmeldetag: **19.09.86**

(54) **Verfahren zum Herstellen von faserhaltigen Bauteilen wie Platten, Formteile oder dergleichen.**

(43) Veröffentlichungstag der Anmeldung:
**23.03.88 Patentblatt 88/12**

(45) Bekanntmachung des Hinweises auf die
Patenterteilung:
**08.01.92 Patentblatt 92/02**

(84) Benannte Vertragsstaaten:
**AT CH DE FR GB LI**

(56) Entgegenhaltungen:
**WO-A-80/01888**      **BE-A- 337 031**
**CH-A- 458 176**     **CH-A- 505 674**
**DE-B- 1 123 244**    **DE-C- 253 545**
**FR-A- 863 228**     **US-A- 2 268 965**
**US-A- 2 944 291**

(73) Patentinhaber: **KRONOSPAN ANSTALT**

**FL-9490 Vaduz(LI)**

(72) Erfinder: **Winkler, Hermann**
**Zappenburg 3a**
**W-3177 Sassenburg(DE)**

(74) Vertreter: **Türk, Gille, Hrabal**
**Brucknerstrasse 20**
**W-4000 Düsseldorf 13(DE)**

**Beschreibung**

Die Erfindung betrifft ein Verfahren zum Herstellen von im wesentlichen aus Gips und Lignocellulose-haltigen Fasern bestehenden Bauteilen wie Platten, Formteilen oder dergleichen, bei dem Gipspulver als Halbhydrat mit den Fasern vermischt, dieses Gemisch in die gewünschte Form gebracht, verdichtet und zu den Formteilen verpreßt wird, wobei das Gipspulver mit Hilfe von Wasser ($H_2O$) vom Halbhydrat in Dihydrat umgewandelt wird und die gepreßten Formteile durch Wärmeeinwirkung getrocknet werden.

In der Bauindustrie werden zunehmend sognannte Gipsfaserplatten (Gypsum-Fiber-Boards) und Gipsspanplatten (Bison-Gypsum-Boards) anstelle der früher üblichen Gipskartonplatten bzw. Gipscardboards (Plaster-Boards) benutzt.

Gipskartonplatten werden im sogenannten Naßverfahren hergestellt, bei dem das Verhältnis zwischen Wasser und Gips zwischen 0,7 und 0,8 liegt. Da für die Umwandlung von Gips aus Halbhydrat zum Dihydrat nur ein Wasser-Gips-Verhältnis von 0,16 (Massenverhältnis bezogen auf Trockengips) benötigt wird und das Wasser-Gips-Verhältnis ganz wesentlich die Festigkeitseigenschaften des Endproduktes bestimmt, ist die Festigkeit derart hergestellter Gipskartonplatten verhältnismäßig niedrig. Außerdem ist ein großer Energieaufwand zum Abtrocknen des überschüssigen Wassers erforderlich.

Gipsfaserplatten (Gypsum-Fiber-Boards) werden in der Regel aus im Recyclingverfahren gewonnen Papierfasern und Gips hergestellt, und zwar ebenfalls im Naßverfahren. Hierbei beträgt das Wasser-Gips-Verhältnis etwa 0,6. Es ergeben sich ähnliche Probleme wie bei der Herstellung von Gipskartonplatten, jedoch liegt die Biegefestigkeit und die Druckfestigkeit der Gipsfaserplatten höher als bei Gipskartonplatten.

Ein Verfahren dieser Art ist in DE-B-1 123 244 offenbart. Bei diesem Verfahren werden Schichten aus Gips und Faserbahnen gebildet, auf die man einen Feuchtigkeitsträger, z.B. ein angefeuchtetes Tuch, auflegt, bevor das Ganze in eine Heißpresse gelangt , wo die in dem Tuch enthaltene Feuchtigkeit verdampfen und dadurch in die Gips- und Faserschichten eindringen soll.

Weitere Verfahren sind aus CH-A-458 176 und CH-A-505 674 bekannt, bei denen daß Gips/Papierfaser-Gemisch zunächst befeuchtet und anschließend in einer Presse in die gewünschte Form gepreßt wird.

Bei allen diesen Verfahren wird also das Befeuchten mit Wasser vor oder während des Verpressens vorgenommen.

Es ist aber auch aus WO-A-80/01888 bekannt, Flüssigkeit nach Vollendung des Formvorganges, d.h. beim Entformen, zuzugeben. Man hat dann allerdings keinen Einfluß mehr auf die durch die Flüssigkeitsaufnahme bedingte Volumenänderung des Formstückes.

Das kürzlich bekanntgewordene Verfahren zum Herstellen von Gipsspanplatten (Bison-Gypsum-Boards) ist ein Halbtrockenverfahren (nach Prof. Dr. G. Kossatz). Hierbei beträgt das Wasser-Gips-Verhältnis etwa 0,3. Als Wasserträger für die Umwandlung des Gipses vom Halbhydrat zum Dihydrat dienen feine Holzspäne, die mit Wasser beladen sind, wobei der feuchte Gehalt etwa 150 % beträgt. Auch bei diesem Verfahren wird mit einem Wasserüberschuß gearbeitet, das heißt das Wasser-Gips-Verhältnis beträgt 0,3 gegenüber dem wirklich benötigten Verhältnis von 0,16. Dementsprechend muß auch bei diesem bekannten Verfahren das überschüssige Wasser durch einen energieaufwendigen Trockenprozeß nach dem Form- und Verdichtungsvorgang entfernt werden. Problematisch ist bei diesem Verfahren insbesondere die Zeitabstimmung zwischen dem Vermischen der etwa 150 % feuchten Holzspäne mit dem in Form von Halbhydrat vorliegenden Gips und dem Versteifungsbeginn und dem Hydrationsende des feuchten Gemisches.

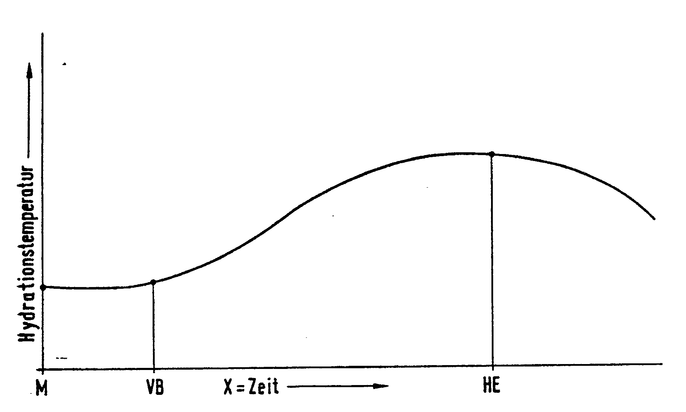

In der beigefügten Zeichnung ist das Verhältnis zwischen der Hydrationstemperatur und dem Zeitablauf zwischen dem Mischen (M), dem Versteifungsbeginn des Gemisches (VB) und dem Hydrationsende (HE) der hergestellten Formteile oder Formkörper schematisch dargestellt.

Da der Zeitablauf bis zum Versteifungsbeginn des Gemisches und bis zum Hydrationsende in einem direkten Zusammenhang zueinander stehen und damit die erzielbaren Eigenschaften der Endprodukte beeinflussen, wirken sich Verkürzungen der Hydrationszeit auch verkürzend auf den Versteifungsbeginn aus. Dieser Zusammenhang hat erschwerenden Einfluß auf die Verfahrenstechnik. Um das Verfahren zum Herstellen von Gipsspanplatten in der Praxis beherrschen zu können, ist man deshalb bestrebt, den Versteifungsbeginn mit Hilfe von Verzögerungsmitteln, nämlich Chemikalien, hinauszuschieben.

In der Praxis wird heutzutage zum Herstellen von Gips-Span -Platten und dergleichen das von der zementgebundenen Spanplatte bekannte Verfahren angewendet.

Aufabe der Erfindung ist es, ein Verfahren zum Herstellen von Gips und lignocellulose-haltigen Fasern enthaltenden Platten, Formteilen oder dergleichen zu schaffen, welches einfacher und wirtschaftlicher durchzuführen und bessere Endprodukte liefert.

Diese Aufgabe wird erfindungsgemäß mit einem Verfahren der eingangs genannten Gattung gelöst, welches die kennzeichnenden Merkmale des Patentanspruches 1 aufweist. Vorteilhafte Ausgestaltungen sind Gegenstand der Unteransprüche.

Erfindungsgemäß wird zum Herstellen von Platten, Formteilen oder dergleichen, die im wesentlichen aus Gips und lignocellulose-haltigen Fasern bestehen, zunächst Holz zerfasert und getrocknet. Das getrocknete zerfaserte Holz wird dann mit trockenem Gipspulver oder dergleichen Gipsprodukte in Form eines Halbhydrats und wahlweise auch zusätzlich mit z.B. pulverförmigen Harzen oder Kunststoffen vermischt. Aus diesem trockenen Gemisch wird eine Matte oder ein Formkörper gebildet, die bzw. der zu dem endgültigen Produkt verpreßt wird. Während des Verdichtungsvorganges wird dem aus dem trockenen Gemisch gebildeten Körper Wasser und insbesondere Kristallwasser oder auch Wasserdampf zur Hydration des Gipses zugegeben, um den Gips aus dem Zustand des Halbhydrates in sein Dihydrat umzuwandeln. Die im Gemisch gegebenenfalls vorhandenen Harze und/oder Kunststoffe werden bei einer späteren Wärmebehandlung der Platte, des Formteiles oder dergleichen aktiviert, während gleichzeitig überschüssiges Wasser durch die Wärmeeinwirkung entfernt, das heißt also das Produkt getrocknet wird.

Durch die Erfindung kommt man mit sehr viel geringeren Wassermengen als bisher aus, so daß auch nur verhältnismäßig wenig Wärmeenergie zum Trocknen benötigt wird. Tatsächlich ist es mit der Erfindung möglich, dem idealen Wasser-Gips-Verhältnis von 0,16 sehr nahe zu kommen.

Das zum Umwandeln des Halbhydrates zum Dihydrat des Gipses benötigte Wasser wird also erfindungsgemäß erst während des Verdichtens des Gipsfaserrohlings zugegeben, und zwar in Form von Kristallwasser oder Dampf unter Druck, so daß die Flüssigkeit den Gipsfaserrohling durchdringt und während des Preßvorganges in ruhendem Zustand die Kristallbildung bis zum Hydrationsende stattfinden kann.

Wird für die Umwandlung des Halbhydrates zum Dihydrat das Wasser in Form von Wasserdampf zugegeben, kann vorzugsweise der bei der Faserherstellung anfallende Abdampf verwendet werden. Die für die Trocknung des fertigen Produktes erforderliche Wärme kann ebenfalls durch den bei der Faserherstellung anfallenden Abdampf zugeführt werden.

Als Harze und/oder Kunststoffe können pulverförmige oder körnige duroplastische und/oder thermoplastische Harze und/oder Kunststoffe verwendet werden, die bei der Wärmenachbehandlung aktiviert werden, bei der gleichzeitig überschüssiges Wasser aus dem Endprodukt entfernt wird.

Zur weiteren Erläuterung der Erfindung dient nachfolgendes Beispiel.

Beispiel:

Aus einem Gips-Faser-Gemisch mit einem Feuchtigkeitsgehalt von nicht über 10% wird eine lockere Matte aufgeschüttet. Diese Matte wird in einer Presse vorverdichtet und schließlich auf das Nennmaß in der Fertigpresse gepreßt. Danach kann sie einer Wärmebehandlung unterworfen werden.

Nach dem Vorverdichten der aufgeschütteten Matte wird dieser das zum Umwandeln des Gipses aus dem Zustand des Halbhydrates in das Dihydrat benötigte Wasser zugegeben, vorzugsweise in Form von Dampf. Zu diesem Zweck wird die zum Vorverdichten verwendete Presse noch einmal geöffnet, wodurch sich das vorverdichtete Gips-Faser-Gemisch noch einmal ausdehnen kann. Dabei wird der Wasserdampf in die sich ausdehnende Matte sozusagen eingesaugt, so daß eine schnelle und gleichmäßige Verteilung des Wasserdampfes in der Gips-Faser-Matte stattfindet. Danach wird die Matte wieder verdichtet und in der Fertigpresse auf Nennmaß gepreßt ünd fertig behandelt.

Wird als Fertigpresse eine einetagige Presse benutzt, verwendet man für das Vorverdicht en und Befeuchten der Fasermatte zweckmäßig eine Vorpresse, während die Fertigbehandlung der angefeuchteten und vorverdichteten Matte in der Fertigpresse erfolgt. Bei Verwendung einer Mehretagenpresse ist es hingegen zweckmäßiger, vor verdichten, Befeuchten und Fertigbehandlung in ein und derselben Presse vorzunehmen, weil andernfalls die Gefahr besteht, daß bei einigen der vorverdichteten und angefeuchteten Matten bereits die Versteifung beginnt, bevor die Fertigpresse vollständig mit angefeuchteten Matten beladen ist.

**Patentansprüche**

1. Verfahren zum Herstellen von im wesentlichen aus Gips und lignocellulosehaltigen Fasern bestehenden Platten, Formteilen oder dergleichen, bei dem Gipspulver als Halbhydrat mit den Fasern vermischt, dieses Gemisch in die gewünschte Form gebracht, verdichtet und zu den Formteilen verpreßt wird, wobei das Gipspulver mit Hilfe von Wasser ($H_2O$) vom Halbhydrat in Dihydrat umgewandelt wird und die gepreßten Formteile durch Wärmeeinwirkung getrocknet werden,
**dadurch gekennzeichnet,**
daß zunächst ein trockenes Gemisch aus Gipspulver (Halbhydrat) und Fasern in die gewünschte Form geschüttet und danach verdichtet wird und daß das zum Umwandeln des Gipses benötigte Wasser während des Verdichtens des Gips-Faser-Gemisches diesem zugegeben wird.

2. Verfahren nach Anspruch 1, dadurch gekennzeichnet, daß das zu einer Matte geschüttete trockene Gips-Faser-Gemisch zunächst vorverdichtet, nach dem Vorverdichten der aufgeschütteten Matte diese noch einmal ausdehnen gelassen und dabei das benötigte Wasser in Form von Wasserdampf in die sich ausdehnende Matte eingesaugt wird.

3. Verfahren nach Anspruch 1 oder 2, dadurch gekennzeichnet, daß dem Gipspulver körnige oder pulverförmige Kunststoffe oder Harze zugesetzt werden.

4. Verfahren nach Anspruch 3, dadurch gekennzeichnet, daß dem Gipspulver wärmeaktivierbare Kunststoffe oder Harze zugesetzt werden.

5. Verfahren nach einem der Ansprüche 1 bis 4, dadurch gekennzeichnet, daß das zum Bilden des Dihydrats benötigte Wasser dem Gemisch aus Gips und Fasern und ggfs. Kunststoff oder Harz in Form von Kristallwasser oder Wasserdampf unter Druck zugegeben und somit in das Gemisch eingetrieben wird.

6. Verfahren nach einem der Ansprüche 1 bis 5, dadurch gekennzeichnet, daß als Wasserdampf beim Erzeugen der lignocellulosehaltigen Fasern anfallender Abdampf verwendet wird.

7. Verfahren nach einem der Ansprüche 1 bis 6, dadurch gekennzeichnet, daß für die Wärmebehandlung und Trocknung beim Erzeugen der lignocellulosehaltigen Fasern anfallender Abdampf verwendet wird.

## Claims

1. Method of making boards, moulded elements or the like comprising substantially gypsum and fibres containing ligno-cellulose, in which the gypsum powder is mixed with the fibres as a semi-hydrate, this mixture is brought to the desired shape, compressed and pressed to form the moulded elements, the gypsum powder being converted with the aid of water ($H_2O$) from the semi-hydrate into the di-hydrate and the pressed moulded elements being dried by the action of heat, characterised in that, first a dry mixture of gypsum powder (semi-hydrate) and fibres is deposited in the desired shape and thereupon compressed and that the water necessary for conversion of the gypsum is added during the compression of the gypsum-fibre mixture.

2. Method according to Claim 1 characterised in that the dry gypsum-fibre mixture deposited in the form of a mat is first pre-squeezed and after the pre-squeezing step on the deposited mat it is allowed to expand again and in this stage the necessary water in the form of vapour or steam is sucked up into the expanding mat.

3. Method according to Claim 1 or 2 characterised in that granular or powdered plastics or resin are added to the gypsum powder.

4. Method according to Claim 3 characterised in that heat-activable plastics or resins are added to the gypsum powder.

5. Method according to one of Claims 1 to 4 characterised in that the water necessary for forming the di-hydrate is added to the mixture of gypsum and fibres and possibly plastics or resin in the form of water of crystallisation or vapour under pressure and thereby forced into the mixture.

6. Method according to one of Claims 1 to 5 characterised in that waste steam arising on production of the ligno-cellulose-containing fibres is employed as the vapour.

7. Method according to one of Claims 1 to 6 characterised in that waste steam arising on the production of the ligno-cellulose-containing fibres is employed for the heat treatment and drying.

## Revendications

1. Procédé de fabrication de panneaux, pièces moulées ou analogues se composant essentiellement de plâtre et de fibres ligno-cellulosiques, suivant lequel la poudre de plâtre sous forme de semi-hydrate est mélangée aux fibres, ce mélange est mis à la forme voulue, tassé puis comprimé à la forme des pièces moulées, la poudre de plâtre étant transformée de l'état de semi-hydrate à l'état de dihydrate à l'aide d'eau ($H_2O$) et les pièces moulées comprimées étant séchées à la chaleur, caractérisé en ce que tout d'abord un mélange sec de poudre de plâtre (semi-hydrate) et de fibres est mis à la forme voulue par déversement et ensuite il est comprimé, et en ce que l'eau nécessaire à la transformation du plâtre est additionnée au mélange de plâtre et de fibres pendant la compression de ce dernier.

2. Procédé selon la revendication 1, caractérisé en ce que le mélange sec de plâtre et de fibres mis en forme de feutre par déversement subit tout d'abord une pré-compression, et à la fin de la pré-compression du feutre formé par déversement, on laisse ce dernier une fois encore se dilater, et pendant ce processus, l'eau nécessaire sous forme de vapeur d'eau est aspirée dans le feutre en cours de dilatation.

3. Procédé selon la revendication 1 ou 2, caractérisé en ce que la poudre de plâtre est additionnée de matières plastiques ou de résines granulaires ou pulvérulentes.

4. Procédé selon la revendication 3, caractérisé en ce que des matières plastiques ou des résines activables à la chaleur sont additionnées à la poudre de plâtre.

5. Procédé selon l'une des revendications 1 à 4, caractérisé en ce que l'eau nécessaire à la formation du dihydrate est additionnée au mélange de plâtre et de fibres, ainsi qu'éventuellement de matière plastique ou de résine sous forme d'eau de cristallisation ou de vapeur d'eau sous pression et ainsi refoulée dans le mélange.

6. Procédé selon l'une des revendications 1 à 5, caractérisé en ce que la vapeur d'eau utilisée est la vapeur d'eau d'évaporation provenant de la production des fibres ligno-cellulosiques.

7. Procédé selon l'une des revendications 1 à 6, caractérisé en ce que la vapeur d'eau d'évaporation provenant de la production des libres ligno-cellulosiques est utilisée pour le traitement thermique et le séchage.